(19) **Europäisches Patentamt** / **European Patent Office** / **Office européen des brevets**

(11) **EP 4 654 269 A1**

(12) **EUROPEAN PATENT APPLICATION**
published in accordance with Art. 153(4) EPC

(43) Date of publication:
26.11.2025 Bulletin 2025/48

(21) Application number: 24863160.8

(22) Date of filing: 03.09.2024

(51) International Patent Classification (IPC):
*H01M 4/04* (2006.01)   *B65H 43/04* (2006.01)
*G01N 21/88* (2006.01)   *G01B 7/004* (2006.01)
*G06Q 50/04* (2012.01)

(52) Cooperative Patent Classification (CPC):
B65H 43/04; G01B 7/004; G01N 21/88;
G06Q 50/04; H01M 4/04; H01M 10/04; Y02E 60/10;
Y02P 70/50

(86) International application number:
PCT/KR2024/013253

(87) International publication number:
WO 2025/053579 (13.03.2025 Gazette 2025/11)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 05.09.2023 KR 20230117944

(71) Applicant: LG Energy Solution, Ltd.
Seoul 07335 (KR)

(72) Inventors:
• **LEE, Jong Hwa**
**Daejeon 34122 (KR)**
• **KIM, Min Su**
**Daejeon 34122 (KR)**
• **CHOI, Ee Beom**
**Daejeon 34122 (KR)**

(74) Representative: BCKIP Part mbB
**MK1**
**Landsbergerstraße 98, 3.Stock**
**80339 München (DE)**

(54) **BATTERY MANUFACTURING SYSTEM AND BATTERY MANUFACTURING METHOD**

(57)    Example embodiments provide a battery manufacturing system. The battery manufacturing system is configured to unwind an electrode sheet from a first electrode roll and winding the electrode sheet into a second electrode roll, and includes a server configured to store coordinate data of the first electrode roll and datum point data indicating datum points on the first electrode roll, a programmable logic controller (PLC) configured to load the coordinate data of the first electrode roll and the datum point data from the server, and a datum point sensor configured to sense a datum point on the electrode sheet unwound from the first electrode roll and generate a datum point sensing signal, in which the PLC is configured to obtain coordinate data of the second electrode roll by calibrating inverted coordinates of stored coordinates included in the coordinate data of the first electrode roll, based on inverted coordinates of stored datum point coordinates included in the datum point data and a coordinate of the sensed datum point.

[FIG. 1]

**Description**

[Technical Field]

The present invention relates to a battery manufacturing system and a battery manufacturing method.
This application claims the benefit of priority based on Korean Patent Application No. 1 0-2023-0117944, filed on September 5, 2023, and the entire content of the Korean patent application is incorporated herein by reference.

[Background Art]

Batteries (secondary batteries) can be charged and discharged a plurality of times unlike primary batteries. Batteries have been widely used as energy sources for various types of wireless devices such as handsets, laptop computers, and cordless vacuum cleaners. Recently, a main use of batteries is moving from mobile devices to mobility, as manufacturing costs per unit capacity of batteries drastically decrease due to improved energy density and economies of scale and a range of battery electric vehicles (BEVs) increases to the same level as fuel vehicles.
Batteries are manufactured by an electrode process, an assembly process, and an activation process. Among these processes, the electrode process is a key process in determining the yield and performance of battery cells. The electrode process may include a coating process, a roll press process, and a slitting process. In the coating process, an active material and an insulating material may be applied to a surface of a current collector. In the roll press process, an electrode may be pressed by pressing rolls. In the roll press process, a density, performance and surface quality of the electrode may be determined. In the slitting process, the electrode may be cut into a plurality of electrodes according to the design of battery cells.

[Disclosure]

[Technical Problem]

The present invention is directed to providing a battery manufacturing system with improved reliability and traceability, and a battery manufacturing method.

[Technical Solution]

Example embodiments of the present invention provide a battery manufacturing system. The battery manufacturing system is configured to unwind an electrode sheet from a first electrode roll and wind the electrode sheet into a second electrode roll, and includes a server configured to store coordinate data of the first electrode roll and datum point data indicating datum points of the first electrode roll, a programmable logic controller (PLC) configured to load the coordinate data of the first electrode roll and the datum point data from the server, and a datum point sensor configured to sense a datum point of the electrode sheet unwound from the first electrode roll and generate a datum point sensing signal, in which the PLC is configured to obtain coordinate data of the second electrode roll by calibrating inverted coordinates of stored coordinates included in the coordinate data of the first electrode roll, based on inverted coordinates of stored datum point coordinates included in the datum point data and a coordinate of the sensed datum point.
Through inverting the stored coordinates, a start coordinate of the coordinate data of the first electrode roll may be calibrated to an end coordinate of the coordinate data of the second electrode roll, and an end coordinate thereof may be calibrated to a start coordinate of the coordinate data of the second electrode roll.
The stored datum point coordinates and the stored coordinates included in the coordinate data may be inverted by the server or the PLC.
The PLC may calculate an offset between the inverted coordinates of the stored datum point coordinates and the coordinate of the sensed datum point, and calibrate the inverted coordinates of the stored coordinates of the first electrode roll, based on the offset.
The datum point sensor may calibrate the coordinate of the sensed datum point, based on an offset length that is a length of the electrode sheet between a rewinder configured to wind the second electrode roll and a part of the electrode sheet at a point in time when the datum point is sensed.
The server may store a first roll map including the coordinate data of the first electrode roll and the datum point data.
The server may generate a second roll map of the second electrode roll based on the datum point sensing data and the obtained coordinate data of the second electrode roll or calibrate coordinate data of a generated second roll map.
Example embodiments provide a battery manufacturing method in which an electrode sheet is unwound from a first electrode roll and wound into a second electrode roll. The battery manufacturing method includes loading coordinate data including stored coordinates of the first electrode roll, and stored datum point data of the first electrode roll, collecting datum point sensing data by sensing a datum point of the electrode sheet unwound from the first electrode roll, the datum point sensing data including a coordinate of the sensed datum point, and obtaining coordinate data of the second electrode roll by calibrating inverted coordinates of the stored coordinates of the first electrode roll, based on inverted coordinates of the stored datum point coordinates and the coordinate of the sensed datum point.

The battery manufacturing method may further include scrapping a defective part of the electrode sheet unwound from the first electrode roll, based on the calibrated coordinates.

Through inverting the stored coordinates, a start coordinate of the coordinate data of the first electrode roll may be calibrated to an end coordinate of the coordinate data of the second electrode roll, and an end coordinate thereof may be calibrated to a start coordinate of the coordinate data of the second electrode roll.

In the battery manufacturing method, an offset between the inverted coordinates of the stored datum point coordinates and the coordinate of the sensed datum point may be calculated, and the inverted coordinates of the stored coordinates of the first electrode roll may be calibrated based on the offset.

The coordinate of the sensed datum point may be calibrated based on an offset length that is a length of the electrode sheet between an unwinder configured to unwind the first electrode roll and a part of the electrode sheet at a point in time when the datum point is sensed.

The coordinate data of the first electrode roll and the datum point data may be loaded based on a first roll map of the first electrode roll including the coordinate data and the datum point data.

A second roll map of the second electrode roll may be generated based on the datum point sensing data and the obtained coordinate data of the second electrode roll or coordinate data of a generated second roll map may be calibrated.

An embodiment provides a second electrode roll formed by winding an electrode sheet that is unwound from a first electrode roll formed by the electrode sheet and that includes a plurality of first datum points in a longitudinal direction.

The electrode sheet wound into the second electrode roll includes a plurality of second datum points corresponding to the plurality of first datum points, and each of the plurality of second datum points is located at either one of inverted positions of the plurality of first datum points on the electrode sheet in the longitudinal direction or one of positions offset from the inverted positions of the plurality of first datum points on the electrode sheet in the longitudinal direction.

[Advantageous Effects]

Example embodiments of the present invention provide a system configured to generate a roll map enabling feedback, feedforward, and tracking of an electrode process and perform a battery manufacturing process based on the roll map, and a battery manufacturing method using the same.

Effects achievable from example embodiments of the present invention are not limited to the above-described effects, and other effects that are not described herein will be clearly derived and understood by those of ordinary skilled in the art to which the example embodiments of the present invention pertain from the following description. That is, unintended effects achieved when the example embodiments of the present invention are implemented are derivable by those of ordinary skilled in the art from the example embodiments of the present invention.

[Brief Description of the Drawings]

FIG. 1 illustrate a battery manufacturing system according to example embodiments.
FIG. 2 is a flowchart of a battery manufacturing method according to example embodiments.
FIG. 3 illustrate a battery manufacturing system according to example embodiments.

[Best Mode]

Hereinafter, embodiments of the present invention will be described in detail with reference to the accompanying drawings. Before describing embodiments of the present invention, the terms or expressions used in the present specification and claims should not be construed as being limited to as generally understood or as defined in commonly used dictionaries, and may be understood according to meanings and concepts corresponding to the present invention on the basis of the principle that the inventor(s) of the application may appropriately define the terms or expressions to optimally explain the present invention.

Therefore, embodiments set forth herein and configurations illustrated in the drawings are only examples of the present invention and do not reflect all the technical ideas of the present invention and thus it should be understood that various equivalents and modifications that replace the configurations would have been made at the filing date of the present application.

Well-known configurations or functions related to describing the present invention may not be described in detail when it is determined that they would obscure the subject matter of the present invention due to unnecessary detail.

Because embodiments of the present invention are provided to more fully explain the present invention to those of ordinary skill in the art, the shapes, sizes, etc., of components illustrated in the drawings may be exaggerated, omitted, or schematically illustrated for clarity. Therefore, it should be understood that the sizes or proportions of components may not fully reflect the actual sizes or proportions thereof.

(First Embodiment)

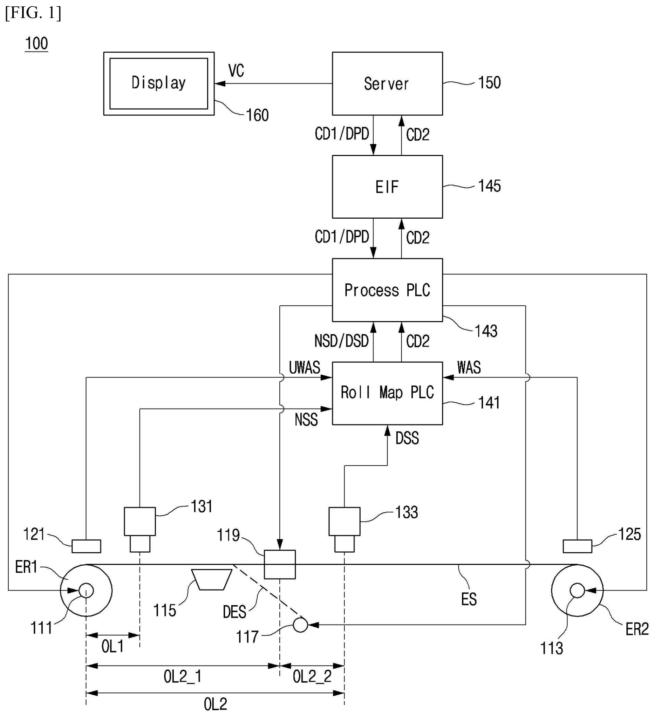

FIG. 1 illustrate a battery manufacturing system 100 according to example embodiments.

Referring to FIG. 1, the battery manufacturing system 100 may include an unwinder 111, a rewinder 113, a splicing table 115, a scrap port 117, a processing device 119, a first rotary encoder 121, a second rotary encoder 125, a no good (NG) sensor 131, a datum point sensor 133, a roll map programmable logic controller (PLC) 141, a process PLC 143, an equipment interface (EIF) 145, a server 150, and a display device 160.

The battery manufacturing system 100 may be configured to generate a roll map including data about an electrode sheet ES. The roll map may represent the electrode sheet ES based on coordinates indicating a position on the electrode sheet ES. A battery manufacturing process may be performed on the electrode sheet ES as described below. The roll map may include data that represents a history of processes performed on the electrode sheet ES and relates to coordinates. Accordingly, the roll map enables feedback, feedforward, and tracking of a battery manufacturing process, which will be described below.

A first electrode roll ER1 on which a previous process (a first process) has been performed may be loaded on the unwinder 111. The unwinder 111 may unwind the electrode sheet ES from the first electrode roll ER1. The rewinder 113 may wind the electrode sheet ES to form a second electrode roll ER2. The electrode sheet ES may be wound into the second electrode roll ER2 and be cut and separated after a certain winding length is reached. Accordingly, the electrode sheet ES may be moved between the unwinder 111 and the rewinder 113 while a current process (a second process) is performed.

Roll maps may be generated in units of lots. A lot is a production unit of a roll-to-roll process, and the second electrode roll ER2 separated after a target winding amount is reached is an example of the lot. The first electrode roll ER1 newly loaded on the unwinder 111 is also an example of the lot. Accordingly, the server 150 may store a first roll map of the previous process. The first roll map may correspond to the first electrode roll ER1. The server 150 may generate and store a second roll map of the current process. The second roll map may correspond to the second electrode roll ER2.

A process of manufacturing a battery (e.g., an electrode process) may be performed on the electrode sheet ES. The electrode process is performed on the electrode sheet ES unwound from the first electrode roll ER1 and wound into the second electrode roll ER2, and thus may be referred to as a roll-to-roll process.

In a roll map, time series data constructed over time (i.e., according to the progress of a process) may be related to coordinate data based on the amount of movement of the electrode sheet ES (i.e., the amount of exhaustion or the amount of input).

For example, the first roll map may include coordinate data CD1 of the first electrode roll ER1 and datum point data DPD indicating datum points (first datum points). The coordinate data CD1 may include coordinates indicating a position of the first electrode sheet ES1.

As a non-limiting example, the second roll map may be generated by updating the first roll map. Alternatively, the second roll map may be generated based on data obtained in a current process.

An outer part of the first electrode roll ER1 may be wound to be an inner part of the second electrode roll ER2, and an inner part thereof may be wound to be an outer part of the second electrode roll ER2. Accordingly, an end coordinate of the coordinate data of the first electrode roll ER1 (a maximum coordinate in the first process), i.e., a coordinate of a start part of the electrode sheet ES wound from the first electrode roll ER1, is a start coordinate of the coordinate data of the second electrode roll ER2 (a minimum coordinate in the second process), i.e., a coordinate of an innermost part of the second electrode roll ER2. Conversely, a start coordinate of the coordinate data of the first electrode roll ER1 (a minimum coordinate in the first process), i.e., a coordinate of an end part of the electrode sheet ES wound from the first electrode roll ER1, is an end coordinate of the coordinate data of the second electrode roll ER2 (a maximum coordinate in the second process), i.e., a coordinate of an outermost part of the second electrode roll ER2.

Therefore, such an inversion of coordinates should be considered during the generation of the second roll map. When the second roll map is generated independently by obtaining data in the current process, it may be necessary to calibrate coordinate data of the second roll map as described below so that a state of the same real electrode may be compared with that in the previous process.

Accordingly, the generation of the second roll map of the second electrode roll ER2 may include inverting the coordinate data of the first roll map of the first electrode roll ER1. By inverting the coordinate data, a start coordinate of the first roll map may be calibrated to an end coordinate of the second roll map, and an end coordinate of the first roll map may be calibrated to a start coordinate of the second roll map.

For example, when the start coordinate of the first roll map of the first electrode roll ER1 is S1 and the end coordinate thereof is E1, an arbitrary coordinate X on the first roll map of the first electrode roll ER1 may be calibrated to a coordinate X' on the second roll map of the second electrode roll ER2 according to Equation 1 below.

[Equation 1]

$$X'=E1-(X-S1)$$

For example, when the start coordinate of the first roll map is 0 and the end coordinate thereof is 1600, an coordinate '100' may be calibrated to 1600-(100-0)=1500. Here, the coordinates are expressed in arbitrary units.

The coordinate data of the second roll map of the second electrode roll ER2 is calibrated according to Equation 1 above, but a relation between the coordinate data and other data (e.g., measurement data and inspection data) of the first roll map does not change. That is, values of data related to the coordinate X on the first roll map of the first electrode roll ER1 may match a coordinate X' on the second roll map of the second electrode roll ER2.

For example, the first roll map may include the coordinate data CD1 of the first electrode roll ER1 and the datum point data DPD indicating datum points.

The coordinate data CD1 may include stored coordinates indicating positions of parts of the electrode sheet ES unwound from the first electrode roll ER1. Table 1 below shows examples of coordinate data CD1 of a plurality of positions on the first electrode roll ER1 formed by winding the electrode sheet ES that is 2000 m long.

[Table 1]

| Stored coordinate (m) | Inverted coordinate (m) |
|---|---|
| 1880 | 120 |
| 1870 | 130 |
| 1290 | 710 |
| 1270 | 730 |

Numerical values in the first column of Table 1 are stored coordinates of a plurality of positions on the electrode sheet ES when wound into the first electrode roll ER1 in the first process. A position with a larger coordinate corresponds to an outer part of the first electrode roll ER1, and a position with a smaller coordinate corresponds to an inner part of the first electrode roll ER1. The plurality of positions may be positions of defective points or sections detected when the first process was performed.

Numerical values in the second column of Table 1 are inverted coordinates of positions corresponding to the plurality of positions on the first electrode roll ER1 when the electrode sheet ES is wound into the second electrode roll ER2 in the second process. A position with a larger inverted coordinate corresponds to an inner part of the first electrode roll ER1, and a position with a smaller inverted coordinate corresponds to an outer part of the first electrode roll ER1.

The inverted coordinates may be calculated by Equation 1 above.

The datum point data DPD may include sequence values indicating a sequence of the datum points on the electrode sheet ES, and coordinates matching the sequence values. Table 2 below shows examples of datum point data DPD obtained in the first process and inverted coordinates of the datum point data DPD when an electrode sheet wound into the first electrode roll ER1 is 2000 m long.

[Table 2]

| Sequence | Stored datum point coordinate (m) | Inverted datum point coordinate (m) |
|---|---|---|
| 19 | 1900 | 100 |
| 18 | 1800 | 200 |
| 17 | 1700 | 300 |
| 16 | 1600 | 400 |
| 15 | 1500 | 500 |
| 14 | 1400 | 600 |
| 13 | 1300 | 700 |

(continued)

| Sequence | Stored datum point coordinate (m) | Inverted datum point coordinate (m) |
|---|---|---|
| 12 | 1200 | 800 |
| 11 | 1100 | 900 |
| 10 | 1000 | 100 |
| 9 | 900 | 1100 |
| 8 | 800 | 1200 |
| 7 | 700 | 1300 |
| 6 | 600 | 1400 |
| 5 | 500 | 1500 |
| 4 | 400 | 1600 |
| 3 | 300 | 1700 |
| 2 | 200 | 1800 |
| 1 | 100 | 1900 |

The datum points (the first datum points) may be formed at equal intervals on the electrode sheet ES. In Table 1, an interval between the datum points is 100 m, but is only an example and the technical idea of the present invention should not be understood as being limited thereto in any sense. The interval between the datum points may be determined according to a requirement for the precision of tracking process events on the electrode sheet ES.

In the first process, a datum point with a lower priority may be formed later than a datum point with a higher priority. The datum point with the lower priority may have a relatively large coordinate, because an input amount is large compared to an input electrode sheet amount when the electrode sheet ES is wound into the first electrode roll ER1 in the first process. On the other hand, the datum point with the higher priority may have a relatively small coordinate, because the input amount is small compared to the input electrode sheet amount. The datum point with the lower priority is wound to be on an outside of the first electrode roll ER1, and thus may be inverted and have a relatively small coordinate compared to the input electrode sheet amount when the first electrode roll ER1 is unwound in the second process.

The stored datum point coordinate, and the stored coordinate included in the coordinate data described above may be inverted by a server or a PLC.

The manufacture of a battery involves a series of different processes, and a leading process affects the following process. In this case, it is difficult to reflect time series data of the leading process in the following process when the time series data of the leading process does not directly match a workpiece, an intermediate product, and a product of the real world. Hereinafter, correcting the following process on the basis of data generated according to a result of the leading process may be referred to as feedforward.

Here, the workpiece may be an article provided as a result of each process, e.g., the electrode sheet ES on which the coating process, the roll press process, and the slitting process are performed. The intermediate product may be one of separators cut by the notching process, electrodes, and an assembly thereof. The intermediate product may be a structure including a housing and an electrode assembly included in the housing (in some cases, the structure further includes an electrolyte). The product may be an article processed by the activation process to be operable as a battery. The above-described definitions of the workpiece, the intermediate product, and the product are definitions thereof only in one aspect, and thus should not be understood as excluding general definitions thereof.

The electrode process includes a series of roll-to-roll processes. For feedforward, time series data should be related to positions on workpieces, components, intermediate products, and products of the real world. Here, the feedforward may include controlling a process for the electrode sheet ES based on the roll map of the first electrode roll ER1 generated in the previous process. The roll map may allow time series data to be related with coordinate data including coordinates of the positions on the workpieces, the components, the intermediate products, and the products of the real world. The roll map may provide matching between time series data and the real-world workpieces, the components, the intermediate products, and the products, based on the coordinate data. Accordingly, feedforward based on generation of the roll map and the roll map may improve the productivity and quality of a process by digitizing and objectifying aspects of the process that depend on an operator's discretion.

A roll map of a preceding lot may be used to improve a process for a subsequent lot, and this behavior may be referred to as process feedback. The process feedback using the roll map may include identifying process conditions and process parameters that have caused problems and defects, based on data included in the roll map. For example, the second roll map of the second electrode roll ER2 may be generated by winding the electrode sheet ES processed in the current process, and processing of a subsequent lot may be controlled based on the second roll map.

Furthermore, as described below, roll maps may be cumulatively generated for workpieces, intermediate products, and products of unit processes to track process history of products (e.g., battery cells, battery modules, or battery packs) on the market. For example, the battery cell may include a cell identifier (ID) on an electrode assembly or a case. The cell ID may include lot numbers and coordinate information of electrodes and a separator included in the battery cell. In other words, the cell ID may be related to a roll map of the electrodes and the separator included in the battery cell. Accordingly, when an event, e.g., a quality issue, occurs in the battery cell on the market, history data of the manufacture of the battery cell may be retrieved based on the cell ID.

The first rotary encoder 121 may be configured to sense an amount of the electrode sheet ES unwound from the first electrode roll ER1 by the unwinder 111. Accordingly, the first rotary encoder 121 may be configured to generate an input amount signal UWAS indicating a length of the electrode sheet ES unwound by the unwinder 111. The first rotary encoder 121 may be configured to transmit the input amount signal UWAS to the roll map PLC 141. The roll map PLC 141 may be configured to collect input amount data based on the input amount signal UWAS of the electrode sheet ES.

The second rotary encoder 125 may be configured to sense an amount of the electrode sheet ES wound into the second electrode roll ER2 by the rewinder 113. Accordingly, the second rotary encoder 125 may be configured to generate an exhaustion amount signal WAS indicating a length of the electrode sheet ES wound by the rewinder 113. The second rotary encoder 125 may be configured to transmit the exhaustion amount signal WAS1 to the roll map PLC 141. The roll map PLC 141 may be configured to collect exhaustion amount data based on the exhaustion amount signal WAS of the electrode sheet ES.

The roll map PLC 141 may be configured to collect coordinate data of the electrode sheet ES based on one of the input amount signal UWAS and the exhaustion amount signal WAS of the electrode sheet ES.

For example, the roll map PLC 141 may determine a moving distance of the electrode sheet ES from the unwinder 111 based on the input amount signal UWAS of the electrode sheet ES. Accordingly, the roll map PLC 141 may be configured to determine a coordinate of a part of the electrode sheet ES, which is to be unwound by the unwinder 111, on the electrode sheet ES at each point in time when a process is performed by the processing device 119.

As another example, the roll map PLC 141 may determine a moving distance of the electrode sheet ES to the rewinder 113 based on the exhaustion amount signal WAS of the electrode sheet ES. Accordingly, the roll map PLC 141 may be configured to determine a coordinate of a part of the electrode sheet ES, which is to be wound by the rewinder 113, on the electrode sheet ES at each point in time when a process is performed by the processing device 119.

Hereinafter, the technical idea of the present invention will be described with respect to an embodiment in which the roll map PLC 141 collects coordinate data based on the input amount signal UWAS of the electrode sheet ES. When the coordinate data is collected based on the input amount signal UWAS, the amount of the electrode sheet ES to be unwound may be sensed, and thus, loss of the electrode sheet ES caused by a factor, such as a sample test of the first electrode roll ER1, movement of the first electrode roll ER1 from a previous process stage to a current process stage, loading of the first electrode roll ER1 on the unwinder 111, connecting a part of the electrode sheet ES of the loaded first electrode roll ER1 and a part of the electrode sheet ES on the rewinder 113, or a remaining amount caused due to inability to unwind the electrode sheet ES, may be exactly determined.

According to example embodiments, the roll map PLC 141 may be configured to further collect additional coordinate data based on the exhaustion amount signal WAS. In this case, the coordinate data collected based on the input amount signal UWAS may be used to calibrate coordinate data CD and datum point data DPD transmitted from a roll map of the previous process (i.e., the first roll map of the first electrode roll ER1), and the additional coordinate data collected based on the exhaustion amount signal WAS may be used to generate a roll map of the current process (i.e., the second roll map of the completed second electrode roll ER2).

The coordinate data may include a coordinate matching each part of the electrode sheet ES. That is, each of arbitrary points on the electrode sheet ES may match a coordinate. The coordinate may be one-dimensional (1D) quantity in a longitudinal direction of the electrode sheet ES, but is not limited thereto. For example, the coordinate may be two-dimensional (2D) quantities in the longitudinal direction of the electrode sheet ES and a width direction of the electrode sheet ES.

The NG sensor 131 may be configured to sense one of an NG mark and an NG tag on the electrode sheet ES. The NG mark may be formed by, for example, an inkjet printer or the like, and include information about the position and type of a defect. The NG tag may be attached to the electrode sheet ES by an operator or an NG tag attacher, and indicate the position of a defect of the electrode sheet ES. As a non-limiting example, the NG sensor 131 may include a machine vision or a color sensor.

The NG sensor 131 may be configured to generate an NG sensing signal NSS to sense one of an NG mark and an NG tag on an electrode sheet. The NG sensor 131 may be configured to transmit the NG sensing signal NSS to the roll map PLC 141.

The roll map PLC 141 may be configured to collect NG sensing data NSD based on the NG sensing signal NSS and the coordinate data. The roll map PLC 141 may be configured to collect the NG sensing data NSD by relating the NG sensing signal NSS with the coordinate data. The NG sensing data NSD may include, for example, a defect value indicating the presence and aspect of a defect, and a coordinate matching the defect value.

To collect the NG sensing data NSD, the coordinate data may be calibrated based on an offset length OL1. The calibrating of the coordinate data may include compensating for the difference between a part of the electrode sheet ES sensed by the first rotary encoder 121, i.e., a part of the electrode sheet ES wound by the unwinder 111, and a part of the electrode sheet ES sensed by the NG sensor 131.

According to example embodiments, the roll map PLC 141 may calibrate coordinate data collected at the same time as the NG sensing signal NSS based on the offset length OL1, and relate the calibrated coordinate data with the NG sensing signal NSS to collect the NG sensing data NSD.

The offset length OL1 is a length of the electrode sheet ES between the NG sensor 131 and the unwinder 111 according to a moving path of the electrode sheet ES. The offset length OL1 may be equal to or greater than a straight-line distance between the NG sensor 131 and the unwinder 111.

The datum point sensor 133 may be configured to sense datum points on the electrode sheet ES to collect datum point data of the electrode sheet ES. The datum point sensor 133 may include, for example, an OCR barcode reader. Each of the datum points on the electrode sheet ES may include an arbitrary identification mark (e.g., a 1D or 2D barcode) that includes information about a moving direction of the electrode sheet ES and a formed sequence of the datum points in a process of forming the datum points. The datum point sensor 133 may be configured to sense the datum points on the electrode sheet ES to generate a datum point sensing signal DSS. The datum point sensor 133 may be configured to transmit the datum point sensing signal DSS to the roll map PLC 141.

The roll map PLC 141 may be configured to collect datum point sensing data DSD based on the coordinate data and the datum point sensing signal DSS. The roll map PLC 141 may be configured to collect the datum point sensing data DSD by relating the datum point sensing signal DSS with the coordinate data. The datum point sensing data DSD may include, for example, the sequence of the datum points and coordinates matching the datum points.

To collect the datum point sensing data DSD, the coordinate data may be calibrated based on an offset length OL2. The calibrating of the coordinate data includes compensating for the difference between a part of the electrode sheet ES sensed by the first rotary encoder 121, i.e., a part of the electrode sheet ES unwound by the unwinder 111, and a part of the electrode sheet ES sensed by the datum point sensor 133.

According to example embodiments, the roll map PLC 141 may be configured to calibrate coordinate data collected at the same time as the datum point sensing signal DSS based on the offset length OL2 and relate the calibrated coordinate data with the datum point sensing signal DSS to collect the datum point sensing data DSD.

The offset length OL2 is a length of the electrode sheet ES between the datum point sensor 133 and the unwinder 111 according to a moving path of the electrode sheet ES. The offset length OL2 may be equal to or greater than a straight line distance between the datum point sensor 133 and the unwinder 111.

The offset length OL2 may include a first part OL2_1 and a second part OL2_2. The first part OL2_1 may be a part that has not been processed by the processing device 119, and the second part OL2_2 may be a part that has been processed by the processing device 119. Accordingly, length characteristic of the first part OL2_1 may be different from length characteristic of the second part OL2_2. For example, when the processing device 119 includes pressing rolls for the roll pressing process, the first part OL2_1 may not be elongated and the second part OL2_2 may be elongated. According to example embodiments, in the calibrating of the offset length OL2, the first part OL2_1 may be calibrated differently from the second part OL2_2. For example, the second part OL2_2 may be calibrated by compensating for a change in the length characteristics through reverse calculation of an elongation rate or the like by the processing device 119.

According to example embodiments, the roll map PLC 141 may be configured to transmit the NG sensing data NSD and the datum point sensing data DSD to the process PLC 143. Alternatively, the datum point data DPD may be transmitted from the process PLC 143.

The roll map PLC 141 and/or the process PLC 143 may be configured to compare the datum point data DPD (e.g., first datum point data) with the datum point sensing data DSD (e.g., second datum point data). In this case, the stored coordinates of the datum point data DPD may be inverted by the server 150, and the datum point data DPD about the inverted coordinates may be transmitted from the server 150 to the roll map PLC 141 or the process PLC 143. Alternatively, the roll map PLC 141 or the process PLC 143 may receive the datum point data DPD, which is not inverted, from the server 150, and invert the stored coordinates of the datum points of the datum point data DPD.

In all cases, the roll map PLC 141 and/or the process PLC 143 may be configured to compare the datum point sensing data DSD with an inverted coordinate of the stored datum point coordinate included in the datum point data DPD.

The roll map PLC 141 and/or the process PLC 143 may be configured to calibrate coordinate data of a defective part, based on the NG sensing data NSD. The calibrating of the coordinate data of the defective part based on the NG sensing data NSD may include calibrating coordinates of the coordinate data of the defective part based on the coordinates of the NG sensing data NSD when the coordinates of the coordinate data of the defective part and the coordinates of the NG sensing data NSD do not match.

Table 3 shows examples of the datum point sensing data DSD.

[Table 3]

| Sequence | Stored datum point coordinate (m) | Inverted datum point coordinate (m) | Sensed datum point coordinate (m) | Offset |
|---|---|---|---|---|
| 19 | 1900 | 100 | 95 | 5 |
| 18 | 1800 | 200 | 195 | 5 |
| 17 | 1700 | 300 | 290 | 10 |
| 16 | 1600 | 400 | 390 | 10 |
| 15 | 1500 | 500 | 490 | 10 |
| 14 | 1400 | 600 | 590 | 10 |
| 13 | 1300 | 700 | 685 | 15 |
| 12 | 1200 | 800 | 785 | 15 |
| 11 | 1100 | 900 | 885 | 15 |
| 10 | 1000 | 1000 | 985 | 15 |
| 9 | 900 | 1100 | 1085 | 15 |
| 8 | 800 | 1200 | 1180 | 20 |
| 7 | 700 | 1300 | 1280 | 20 |
| 6 | 600 | 1400 | 1380 | 20 |
| 5 | 500 | 1500 | 1480 | 20 |
| 4 | 400 | 1600 | 1580 | 20 |
| 3 | 300 | 1700 | 1680 | 20 |
| 2 | 200 | 1800 | 1780 | 20 |
| 1 | 100 | 1900 | 1880 | 20 |

The second column of Table 3 represents (first) datum point data DPD obtained in the previous process (the first process) of the first electrode roll ER1. The third column of Table 3 represents data obtained by inverting the datum point data DPD. The numerical values in the second and third columns are the same as the data shown in Table 2.

The fourth column of Table 3 represents datum point sensing data DSD (second datum point data) in the current process (the second process). A format in which the datum point sensing data DSD is displayed is not limited to the above table. For example, the datum point sensing data DSD may be in a format including matching between the sequence of the datum points and the coordinates.

The roll map PLC 141 and/or the process PLC 143 may be configured to calculate an offset that is a difference between a coordinate obtained by inverting a stored datum point coordinate of the datum point data DPD and a sensed datum point coordinate of the datum point sensing data DSD. The fifth column of Table 2 represents offsets calculated by the roll map PLC 141 and/or the process PLC 143. The roll map PLC 141 and/or the process PLC 143 may be configured to calibrate an inverted coordinate of a stored coordinate included in the coordinate data CD1 of the first electrode roll ER1, based on the offsets.

Table 4 shows coordinate data calibrated by the roll map PLC 141 and/or the process PLC 143. The calibrating of the coordinate data CD1 may be triggered by sensing of datum points. Although Table 4 shows nineteen datum points at once, the coordinate data CD1 may be calibrated whenever a datum point is sensed.

[Table 4]

| Stored coordinate (m) | Inverted coordinate (m) | Calibrated coordinate (m) |
|---|---|---|
| 1880 | 120 | 115 |
| 1870 | 130 | 125 |

(continued)

| Stored coordinate (m) | Inverted coordinate (m) | Calibrated coordinate (m) |
|---|---|---|
| 1290 | 710 | 695 |
| 1270 | 730 | 715 |

More specifically, the roll map PLC 141 or the process PLC 143 may perform an operation for calculating an offset when a comparison between a sensed datum point coordinate and an inverted coordinate of a stored datum point coordinate reveals that the sensed datum point coordinate and the stored datum point coordinate are different from each other. For example, when a 19th datum point that comes first is sensed, 95 m that is sensed does not match the inverted datum point coordinate of 100 m, and thus an offset of 5 m may be calculated by the roll map PLC 141 or the process PLC 143. Next, a coordinate '120' adjacent to the 19th datum point may be calibrated to '115' based on the offset '5'. Next, a coordinate '130' adjacent to the 19th datum point may be calibrated to '125' based on the offset '5'. A coordinate '710' and a coordinate '730' that are adjacent to a 13th datum point may be respectively calibrated to '695' and '715', based on the offset '15'. Unlike in Table 4, different offsets may be applied according to the positions of coordinates on the electrode sheet ES.

The calibrated coordinates may be obtained as coordinate data CD2 of the second electrode roll ER2 (or the second roll map of the second electrode roll ER2).

The stored coordinates of the coordinate data CD of the first roll map of the first electrode roll ER1 may not match coordinates on the real electrode sheet ES unwound from the first electrode roll ER1. Such a mismatch may be caused by a loss due to a sample test of the first electrode roll ER1, a loss occurring during movement of the first electrode roll ER1, a loss occurring during loading of the first electrode roll ER1 on the unwinder 111, connection of a part of the electrode sheet ES of the loaded first electrode roll ER1 and a part of the electrode sheet ES on the rewinder 113, or the like.

According to example embodiments, coordinate data may be calibrated based on the datum point sensing data DSD obtained by sensing real datum points on the real electrode sheet ES in the second process and the datum point data DPD. Based on the calibrated accurate coordinate data, for example, a defective part of the electrode sheet ES or the like may be removed. Therefore, when a defective part is scrapped in the second process or a subsequent process, it may be possible to prevent a portion of the defective part from being scrapped or a normal part of the electrode sheet ES from being excessively scrapped. Accordingly, the productivity and yield of the electrode sheet ES may increase.

The process PLC 143 may be configured to control operations of the unwinder 111, the rewinder 113, the scrap port 117, and the processing device 119. The process PLC 143 may be configured to generate a signal for operating or stopping the unwinder 111, the rewinder 113, the scrap port 117, and the processing device 119. The signal for operating or stopping the unwinder 111, the rewinder 113, the scrap port 117, and the processing device 119 may be generated based on a body including a product ID and details of a manufacturing recipe.

The process PLC 143 may receive the NG sensing data NSD from the roll map PLC 141. The process PLC 143 may be configured to generate the signal for operating or stopping the unwinder 111, the rewinder 113, the scrap port 117, and the processing device 119, based on the NG sensing data NSD and coordinate data of the defective part based on the calibrated coordinates. Here, as described above, the coordinate data of the defective part may be generated by the roll map PLC 141 or the process PLC 143, based on the datum point data DPD, the datum point sensing data DSD, and data of the inverted coordinates.

The process PLC 143 may decrease a moving speed of the electrode sheet ES or stop winding and unwinding performed by the unwinder 111 and the rewinder 113, when a defect on the electrode sheet ES identified by either the coordinate data of the defective part obtained based on the calibrated coordinate data or the NG sensing data NSD approaches the splicing table 115.

After a start point of the defect (or a point adjacent to the start point of the defect when a process margin is considered) is cut on the splicing table 115, the scrap port 117 may be configured to wind a defective part DES of the electrode sheet ES as indicated by the dashed line. After the defective part DES of the electrode sheet ES is sufficiently wound by the scrap port 117, a part of the electrode sheet ES connected to the scrap port 117 and a part of the electrode sheet ES connected to the unwinder 111 may be separated from each other. Next, a current process may be continued by connecting the part of the electrode sheet ES connected to the unwinder 111 and the part of the electrode sheet ES connected to the rewinder 113. The part of the electrode sheet ES connected to the unwinder 111 and the part of the electrode sheet ES connected to the rewinder 113 may be connected on the splicing table 115.

The processing device 119 may be located downstream of the flow of the electrode sheet ES compared to the splicing table 115. That is, the processing device 119 may be configured to process the electrode sheet ES, the defective part DES of which is scrapped by processing on the splicing table 115.

For example, the processing device 119 may include a coater, and the electrode sheet ES may be coated with an electrode slurry. As another example, the processing device 119 may include pressing rolls, and the roll pressing process may be performed on the electrode sheet ES coated with the electrode slurry. As another example, the processing device 119 may include a slitting knife, and the electrode sheet ES may be divided into a plurality of electrode sheets.

The battery manufacturing system 10 may further include a measuring device and an inspection device. The measuring device may be configured to measure the electrode sheet ES to collect measurement data of the electrode sheet ES. The measuring device may measure the electrode sheet ES by a scanning method. The measurement data may include a plurality of measured values expressed numerically. For example, the measurement data may include size data, e.g., a thickness and a width, of the electrode sheet ES, data of a loading of a coating material on the electrode sheet ES, size data, e.g., a width of an insulating material on the coating material and an overlapping width between the coating material and the insulating material, mismatch data between coated lanes on an upper surface of the electrode sheet ES and coated lanes on a lower surface of the electrode sheet E, and the like. Here, the loading of the coating material is the amount of the coating material loaded per unit area of the electrode sheet ES, and may be an area density of the coating material.

Whether a measured part of the electrode sheet ES is defective or not may be determined by processing the measurement data by a set method. When an amount of the measured coating material on the electrode sheet ES (e.g., the loading of the coating material on the electrode sheet ES or a thickness of the electrode sheet ES) is in a set range including upper and lower limits, a corresponding part of the electrode sheet ES may be determined as a good-quality part. The corresponding part of the electrode sheet ES may be determined as defective, when the amount of the measured coating material on the electrode sheet ES (e.g., the loading of the coating material on the electrode sheet ES or the thickness of the electrode sheet ES) is less than the lower limit or greater than the upper limit.

The measuring device may include, for example, a time delay and integration (TDI) camera, a complementary metal oxide semiconductor (CMOS) image sensor, and a time-of-flight (TOF) sensor. The measuring device may include an emitter and a receiver that are configured to perform measurement using non-destructive signals such as ultrasound waves, microwaves, terahertz waves, infrared rays, etc. The measuring device may include analog and/or digital sensors, such as a biosensor, a chemical sensor, a composition sensor, a current and/or power meter, an air quality sensor, a gas sensor, a hall effect sensor, a brightness level sensor, an optical sensor, etc. The measuring device may include a pressure sensor, a temperature sensor, an ultrasonic sensor, a proximity sensor, a door state sensor, a motion tracking sensor, a humidity sensor, a visible light and infrared sensor, a camera, etc.

The measuring device may be configured to generate coordinate-related measurement data by relating additional coordinate data based on the exhaustion amount signal WAS with the measurement data. To generate the coordinate-related measurement data, the additional coordinate data may be calibrated based on an offset length of the measurement data.

The measuring device may be configured to collect evaluation data based on the measurement data. The evaluation data may be collected based on a comparison between measured values of a plurality of sections of the electrode sheet ES and a set range.

For example, a measured value (or an average of measured values) that is in a first range may be determined as normal, a measured value (or an average of measured values) that is in a second range greater than the first range may be determined as excessive, a measured value (or an average of measured values) that is in a third range greater than the second range may be determined as very excessive, a measured value (or an average of measured values) that is in a fourth range less than the first range may be determined as insufficient, and a measured value (or an average of measured values) that is in a fifth range less than the fourth range may be determined as very insufficient.

Here, when a lower limit of the second range is greater than or equal to an upper limit of the first range, the second range is greater than the first range. Similarly, when an upper limit of the fourth range is less than or equal to a lower limit of the first range, the fourth range is less than the first range.

Evaluation values of the evaluation data may be related to coordinates. For example, each of the evaluation values may match a start coordinate and end coordinate of one of parts of the electrode sheet ES from which the evaluation values are calculated.

The inspection device may be configured to inspect the electrode sheet ES to collect inspection data of the electrode sheet ES. The inspection device may be configured to detect defects such as a surface defect of the electrode sheet ES, based on a change in a color of a surface of the electrode sheet ES, a change in reflectivity, etc. The inspection device may be configured to collect inspection data of a part of the electrode sheet ES corresponding to (e.g., overlapping) a sensing part.

The inspection data collected by the inspection device may include a result of judging the quality of a part of the electrode sheet ES and a process event. For example, the inspection data may include data about the appearance of the electrode sheet ES collected by an image-based device such as a machine vision, data about disconnections and seams on the electrode sheet ES, data about a portion of the electrode sheet ES on which sampling inspection is performed, data about a portion of the electrode sheet ES to be scrapped, data about the scraped portion of the electrode sheet ES, data about whether the coating material and the insulating material on the electrode sheet ES are defective or not, data about datum points indicating a position of the electrode sheet ES, and defect data such as pinhole defects, crater defects, line defects, crack defects, side ring defects, island defects, folding defects, wrinkle defects, pit defects, and scratch defects. The datum points may be formed on the electrode sheet ES at certain intervals, and other elements on the electrode sheet ES may be located based on the datum points. The inspection device may be a color sensor, a joint sensor, a datum point sensor, a machine vision, etc.

The inspection device may be configured to generate coordinate-related inspection data by relating the additional coordinate data based on the exhaustion amount signal WAS with the inspection data. To generate the coordinate-related inspection data, the additional coordinate data may be calibrated based on an offset length of the inspection device.

The measurement data and the inspection data described above may be time series data. The measurement data and the inspection data may be temporally ordered. Temporal ordering is a main feature of time series data and should be understood as organizing events in an order in which they occur and arrive to be processed. That is, the measurement data and the inspection data may be stored based on points in time when measurement and inspection are performed, and may be related to time. Accordingly, each of measured values of the measurement data may be matched to time, and each of inspection values of the inspection data may be matched to time.

For example, data of measurement amounts (e.g., an amount of loading on the electrode sheet ES or a thickness of the electrode sheet ES) may include a series of measurement amounts (e.g., amounts of loading on the electrode sheet ES or thicknesses of the electrode sheet ES) and time values related to the series of measurement amounts. The measured amounts and the time values may be matched in a one-to-one manner, but are not limited thereto. As another example, the defect data may include a value indicating a defect and a time value related to the value indicating the defect. Here, the value indicating the defect may be understood to be that the value includes information regarding at least one of the presences of defects or the types of the defects.

A roll map may include coordinate-related measurement data and coordinate-related inspection data that are generated by relating measurement data and inspection data, which are time-series data, with coordinate data. Accordingly, the roll map may provide traceability for all processes during performing of a subsequent process or after the shipment of a product.

The roll map PLC 141 may be in operative communication with the first and second rotary encoders 121 and 125, the NG sensor 131, the datum point sensor 133, and additional measuring devices and inspection devices through a wired or wireless data network. The data network may be unidirectional or bidirectional communication. The data network may be implemented by a physical channel, WiFi, public networks and/or specialized networks using Bluetooth or other frequency bands. The first and second rotary encoders 121 and 125, the NG sensor 131, the datum point sensor 133, and the additional measuring devices and inspection devices may be configured to collect data from equipment, a workpiece, an intermediate product, and a product in the battery manufacturing system 100 or to generate a signal for collecting data therefrom.

The coordinate-related measurement data and the coordinate-related inspection data transmitted from the roll map PLC 141 to the process PLC 143 may be transmitted to the server 150 through the process PLC 143 and the EIF 145. The process PLC 143 and the EIF 145 may relay communication of data between the server 150 and the roll map PLC 141. However, the present invention is not limited thereto, and the roll map PLC 141 may directly transmit the coordinate data, the coordinate-related measurement data, and the coordinate-related inspection data to the server 150.

For control of a process, a communication line for connecting the process PLC 143 and the server 150 via the EIF 145 may be installed between the process PLC 143 and the server 150. Accordingly, data transmission through the process PLC 143 may reduce resources required for the installation of the communication line and enable efficient processing and management of data, compared to a case in which the first and second rotary encoders 121 and 125 and a measuring device directly communicate with the server 150 and a case in which the roll map PLC 141 directly communicates with the server 150.

The EIF 145 may be a device for communication between the process PLC 143 of manufacturing equipment and the server 150 that is an upper server.

The server 150 may be configured to generate and store a roll map. Roll maps may be generated in units of lots. The roll map may include data about specifications of a lot. The specifications of the lot may include, for example, a lot number, a length of the wound electrode sheet ES, a width of the electrode sheet ES, and materials and a composition used to process the electrode sheet ES.

The server 150 may be configured to store the first roll map of the first electrode roll ER1, transmit the coordinate data CD1 and the datum point data DPD of the first roll map to the process PLC 143, and generate and store the second roll map of the second electrode roll ER2 based on the coordinate-related measurement data and the coordinate-related inspection data. In addition, the coordinate data CD2 of the second roll map may be calibrated based on an offset that is the difference between the datum point sensing data DSD transmitted from the roll map PLC 141 or the process PLC 143 and the inverted coordinates of the datum point data DPD. Alternatively, the second roll map of the second electrode roll ER2 may be generated based on the datum point sensing data DSD and the obtained coordinate data CD2 of the second electrode roll, or the coordinate data CD2 of the second roll map may be calibrated.

According to example embodiments, the server 150 may be a data processing system that supports all activities necessary to manage the manufacturing of batteries, such as work schedule management, work instructions, quality control, and work performance tally. The server 150 may be, for example, a manufacturing execution system (MES). The server 150 may be configured to perform inputting, processing, outputting, and communication of data necessary for the manufacture of electrodes, including the coating process, a press process, and a slitting process.

According to other example embodiments, the server 150 may be configured to store and process raw measurement data. The server 150 may manage the quality of processing the electrode sheet ES by continuously monitoring the processing of the electrode sheet ES based on the inspection data. According to example embodiments, the server 150 may be a statical process controller (SPC). The server 150 may collect and analyze manufacturing data in real or almost real time to identify problematic conditions in a timely manner and provide a notification to an operator before potential problems occur.

According to other example embodiments, the server 150 may be, for example, a data warehouse, and store the NG sensing data NSD, the coordinate data, the coordinate-related measurement data, and the coordinate-related inspection data for a long time based on a quality assurance period of a product.

According to other example embodiments, in order to create a roll map, the server 150 may be provided separately from an MES, an SPC, and a data warehouse.

The roll map PLC 141, the process PLC 143, the EIF 145, and the server 150 may be implemented by hardware, firmware, software, or a combination thereof. For example, the roll map PLC 141, the process PLC 143, the EIF 145, and the server 150 may include computing devices such as general purpose computers, workstation computers, desktop computers, laptop computers, tablet computers, etc. The roll map PLC 141, the process PLC 143, the EIF 145, and the server 150 may include a simple controller, a complex processor such as a microprocessor, a CPU, or a GPU, a processor configured by software, dedicated hardware, or firmware. The roll map PLC 141, the process PLC 143, the EIF 145, and the server 150 may be implemented, for example, by a general-purpose computer processor or application-specific hardware such as a digital signal processor (DSP), a field programmable gate array (FPGA), or an application specific integrated circuit (ASIC).

The server 150 may include a physical server or a cloud server. The server 150 may provide data and an analysis result to an operator through various frameworks. A framework may include a protocol that supports data transmission so that the display device 160 may visualize data through a user interface and provide updated visualization when new data is calculated by the server 150. The protocol supporting data transmission may include HTML, JavaScript, and/or JSON. The server 150 may transmit a visualization command VC to the display device 160, and the display device 160 may visualize a roll map and display the visualized roll map.

The server 150 may include various types of application programming interfaces (APIs) for storing data in a database and other data management tools. The APIs may also be used to retrieve data from databases of various data management systems. The data management systems may be configured to provide access to a database, pull or retrieve data from the database, and generate metrics. Here, the metrics are a tool for visualizing data. The metrics may include measured values generated in a time-series manner and be used to monitor applications and generate a status warning.

The battery manufacturing system 100 may implement a plug-in architecture together with an API for obtaining data to provide a plug-and-play connection of the NG sensor 131, the datum point sensor 133, and the additional measuring devices and inspection devices. Accordingly, resources in a certain process step and a specific site may be easily transferred to a different process and a different site or new resources may be easily introduced into each process step and each site.

A data network between the components of the battery manufacturing system 100 may include various types of communication channels including unidirectional and bidirectional wired and wireless communications. For example, the data network may include an industrial protocol network such as OPC, Modbus, or ProfiNet. The communication channel may be a channel of dedicated conduit communication such as universal serial bus (USB), IEEE 802 (Ethernet), IEEE 1394 (FireWire), or other high-speed data communication standards.

In some embodiments, the battery manufacturing system 100 may further include a manual input system that allows an operator to input manufacturing data. The battery manufacturing system 100 may allow data to be input by an operator with an input tool and a computer-based input of manufacturing data such as Excel file scraping, for example.

According to some embodiments, the operations of the roll map PLC 141, the process PLC 143, the EIF 145, and the server 150 may be implemented as instructions stored on a machine-readable medium that is readable and executable by one or more processors. Here, the machine-readable medium may include an arbitrary apparatus for storing and/or transmitting information in a form readable by a machine (e.g., a computing device). Examples of the machine-readable medium may include a read-only memory (ROM), a random access memory (RAM), a magnetic disk storage medium, an optical storage medium, a flash memory, electrical, optical, acoustic or other types of radio signals (e.g., carrier waves, infrared signals, digital signals, etc.), and other signals.

The roll map PLC 141 may be implemented by, for example, software configured to collect the coordinate data, the NG sensing data NSD, and the datum point sensing data DSD and transmit the NG sensing data NSD and the datum point sensing data DSD.

The process PLC 143 may include software configured to receive product ID, product recipe, defect data DD, the datum point data DPD, the NG sensing data NSD, and the datum point sensing data DSD, transmit the NG sensing data NSD and the datum point sensing data DSD, and generate a control signal for controlling the unwinder 111, the rewinder 113, the scrap port 117, and the processing device 119 based on the product ID, the product recipe, the defect data DD, the datum point data DPD, the NG sensing data NSD, and the datum point sensing data DSD. More specifically, the process PLC 143 may include software configured to calculate an offset between datum points based on the datum point data DPD and the datum point sensing data DSD, calibrate the coordinate data CD1 based on the offset, and generate a control signal for controlling the unwinder 111, the rewinder 113, the scrap port 117, and the processing device 119 based on the calibrated coordinate data.

The EIF 145 may include software for relaying transmission of data and information between the process PLC 143 and the server 150. More specifically, the EIF 145 may include software configured to control the flow of communication between the process PLC 143 and the server 150 and perform error control, synchronization, order control, addressing, multiplexing, routing, format conversion, etc.

The server 150 may include, for example, software configured to transmit the product ID, the product recipe, the coordinate data CD1, and the datum point data DPD to the process PLC 143 and generate a roll map based on the coordinate-related measurement data and the coordinate-related inspection data.

However, the above description is provided only for convenience of description, and the operations of the roll map PLC 141, the process PLC 143, the EIF 145, and the server 150 may also result from computing devices, distributed computing devices, processors, firmware, software, routines, and other devices executing routines, and instructions.

An architecture of the battery manufacturing system 100 configured to generate a roll map may be implemented by adding only the roll map PLC 141 to the process controller 143, the EIF 145, and the server 150, which are elements in a modern process management system. In a system according to example embodiments, resources of an already-installed manufacturing site may be used and additional capital expenditure may be reduced. In addition, applying the same architecture as existing manufacturing equipment to newly constructed manufacturing equipment may lead to improvement of the reliability of the manufacture of a battery, sensing/improvement of problematic processes, and effective introduction of new processes.

[Embodiments of the Present Invention]

(Second Embodiment)

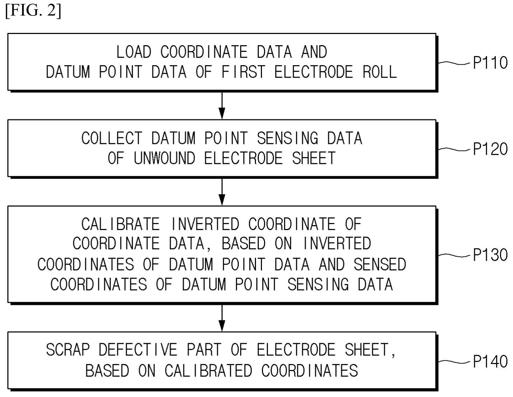

FIG. 2 is a flowchart of a battery manufacturing method according to example embodiments.

Referring to FIGS. 1 and 2, in P110, the coordinate data CD1 of the first electrode roll ER1 and the datum point data DPD of the first electrode roll ER1 may be loaded. The process PLC 143 or the roll map PLC 131 may receive the coordinate data CD1 of the first electrode roll ER1 and the datum point data DPD of the first electrode roll ER1 from the server 150.

Next, in P120, datum points on the electrode sheet ES may be sensed to collect the datum point sensing data DSD. The datum point sensing data DSD may be collected by the datum point sensor 133 and the roll map PLC 141 as described above.

Next, in P130, the coordinate data CD1 may be calibrated based on the datum point sensing data DSD and the datum point data DPD. The calibration of the coordinate data CD1 may be triggered by sensing of datum points. The calibration of the coordinate data CD1 may include calculating an offset that is a difference between a sensed datum point coordinate of the datum point sensing data DSD and an inverted datum point coordinate of the datum point data DPD, and calibrating inverted coordinates of stored coordinates of the coordinate data CD1, based on the offset.

Thereafter, in P140, the defective part DES of the electrode sheet ES may be scrapped based on the calibrated coordinate data. To scrap the defective part DES of the electrode sheet ES, the process PLC 143 may be configured to generate a signal for controlling the operations of the unwinder 111, the rewinder 113, the scrap port 117, and the processing device 119.

(Third Embodiment)

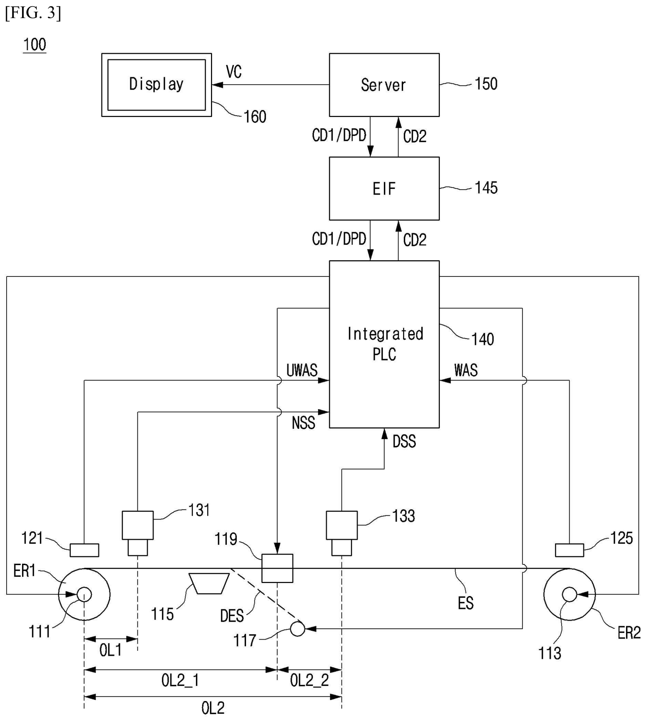

FIG. 3 illustrates a battery manufacturing system 101 according to example embodiments.

Referring to FIG. 3, the battery manufacturing system 101 may include an unwinder 111, a rewinder 113, a splicing table 115, a scrap port 117, a processing device 119, a first rotary encoder 121, a second rotary encoder 125, an NG sensor 131, a datum point sensor 133, an integrated PLC 140, an EIF 145, a server 150, and a display device 160.

The unwinder 111, the rewinder 113, the splicing table 115, the scrap port 117, the processing device 119, the first rotary encoder 121, the second rotary encoder 125, the NG sensor 131, the datum point sensor 133, the EIF 145, the server 150, and the display device 160 are substantially the same as those described above with reference to FIG. 1, and thus a redundant description thereof is omitted here.

The integrated PLC 140 may be configured to perform the functions of the roll map PLC 141 and the process PLC 143 of FIG. 1. Accordingly, the integrated PLC 140 may be configured to generate coordinate data based on an input amount signal UWAS or an exhaustion amount signal WAS, collect the NG sensing data NSD (see FIG. 1) and the datum point sensing data DSD (see FIG. 1), and receive the coordinate data CD1 and the datum point data DPD from the server 150 through the EIF 145. The integrated PLC 140 may be configured to calibrate inverted coordinates of the coordinate data CD1, based on inverted data of the datum point sensing data DSD and the datum point data DPD. The integrated PLC 140 may be configured to generate a signal for controlling the unwinder 111, the rewinder 113, the scrap port 117, and the processing device 119, based on the calibrated coordinate data.

The present invention has been described above in more detail with reference to the drawings, the embodiments, etc. However, the configurations illustrated in the drawings or embodiments described in the present specification are only embodiments of the present invention and do not reflect all the technical ideas of the present invention and thus it should be understood that various equivalents and modifications that replace the configurations would have been made at the filing date of the present application.

(Reference Numerals)

    100: battery manufacturing system
    111: unwinder, 113: rewinder, 115: splicing table
    117: scrap port, 119: processing device
    121, 125: rotary encoder
    131: NG sensor, 133: a datum point sensor
    140, 141, 143: PLC (programmable logic controller)
    145: EIF (equipment interface)
    150: server
    160: display device

**Claims**

1. A battery manufacturing system in which an electrode sheet is unwound from a first electrode roll and wound into a second electrode roll, the battery manufacturing system comprising;

    a server configured to store coordinate data of the first electrode roll and datum point data indicating datum points of the first electrode roll;
    a programmable logic controller (PLC) configured to load the coordinate data of the first electrode roll and the datum point data from the server; and
    a datum point sensor configured to sense a datum point of the electrode sheet unwound from the first electrode roll and generate a datum point sensing signal,
    wherein the PLC is configured to obtain coordinate data of the second electrode roll by calibrating inverted coordinates of stored coordinates included in the coordinate data of the first electrode roll, based on inverted coordinates of stored datum point coordinates included in the datum point data and a coordinate of the sensed datum point.

2. The battery manufacturing system of claim 1, wherein, the PLC configured to calibrate the inverted coordinates of the stored coordinates includes, calibrating a start coordinate of the coordinate data of the first electrode roll to an end coordinate of the coordinate data of the second electrode roll, and calibrating an end coordinate of the coordinate data of the first electrode roll to a start coordinate of the coordinate data of the second electrode roll.

3. The battery manufacturing system of claim 1, wherein the stored datum point coordinates and the stored coordinates included in the coordinate data are inverted by the server or the PLC.

4. The battery manufacturing system of claim 1, wherein the PLC is configured to calculate an offset between the inverted coordinates of the stored datum point coordinates and the coordinate of the sensed datum point, and calibrate the inverted coordinates of the stored coordinates of the first electrode roll, based on the offset.

5. The battery manufacturing system of claim 1, wherein the datum point sensor calibrates the coordinate of the sensed datum point, based on an offset length that is a length of the electrode sheet between a rewinder configured to wind the second electrode roll and a part of the electrode sheet at a point in time when the datum point is sensed.

6. The battery manufacturing system of claim 1, wherein the server is configured to store a first roll map including the coordinate data of the first electrode roll and the datum point data.

7. The battery manufacturing system of claim 1, wherein the server is configured to generate a second roll map of the second electrode roll based on the datum point sensing data and the obtained coordinate data of the second electrode roll or calibrate coordinate data of a generated second roll map.

8. A battery manufacturing method in which an electrode sheet is unwound from a first electrode roll and wound into a second electrode roll, the battery manufacturing method comprising:

    loading coordinate data including stored coordinates of the first electrode roll, and stored datum point data of the first electrode roll;
    collecting datum point sensing data by sensing a datum point of the electrode sheet unwound from the first electrode roll, the datum point sensing data including a coordinate of the sensed datum point; and
    obtaining coordinate data of the second electrode roll by calibrating inverted coordinates of the stored coordinates of the first electrode roll, based on inverted coordinates of the stored datum point coordinates and the coordinate of the sensed datum point.

9. The battery manufacturing method of claim 8, further comprising scrapping a defective part of the electrode sheet unwound from the first electrode roll, based on the calibrated coordinates.

10. The battery manufacturing method of claim 8, wherein, through inverting the stored coordinates, a start coordinate of the coordinate data of the first electrode roll is calibrated to an end coordinate of the coordinate data of the second electrode roll, and
an end coordinate of the coordinate data of the first electrode roll is calibrated to a start coordinate of the coordinate data of the second electrode roll.

11. The battery manufacturing method of claim 10, further comprising calculating an offset between the inverted coordinates of the stored datum point coordinates and the coordinate of the sensed datum point,
wherein the inverted coordinates of the stored coordinates of the first electrode roll are calibrated based on the offset.

12. The battery manufacturing method of claim 8, wherein the coordinate of the sensed datum point is calibrated based on an offset length that is a length of the electrode sheet between an unwinder configured to unwind the first electrode roll and a part of the electrode sheet at a point in time when the datum point is sensed.

13. The battery manufacturing method of claim 8, wherein the coordinate data of the first electrode roll and the datum point data are loaded based on a first roll map of the first electrode roll including the coordinate data and the datum point data.

14. The battery manufacturing method of claim 13, further comprising generating a second roll map of the second electrode roll based on the datum point sensing data and the obtained coordinate data of the second electrode roll or calibrating coordinate data of a generated second roll map.

15. A second electrode roll formed by winding an electrode sheet, which is unwound from a first electrode roll formed by the electrode sheet and includes a plurality of first datum points in a longitudinal direction,

    wherein the electrode sheet wound into the second electrode roll comprises a plurality of second datum points corresponding to the plurality of first datum points, and
    each of the plurality of second datum points is located at either one of inverted positions of the plurality of first datum points on the electrode sheet in the longitudinal direction or one of positions offset from the inverted positions of the plurality of first datum points on the electrode sheet in the longitudinal direction.

[FIG. 1]

[FIG. 2]

```
┌─────────────────────────────────────────────────┐
│              LOAD COORDINATE DATA AND            │
│     DATUM POINT DATA OF FIRST ELECTRODE ROLL     │─── P110
└─────────────────────────────────────────────────┘
                        │
                        ▼
┌─────────────────────────────────────────────────┐
│          COLLECT DATUM POINT SENSING DATA        │
│            OF UNWOUND ELECTRODE SHEET            │─── P120
└─────────────────────────────────────────────────┘
                        │
                        ▼
┌─────────────────────────────────────────────────┐
│            CALIBRATE INVERTED COORDINATE OF      │
│          COORDINATE DATA, BASED ON INVERTED      │
│     COORDINATES OF DATUM POINT DATA AND SENSED   │─── P130
│     COORDINATES OF DATUM POINT SENSING DATA      │
└─────────────────────────────────────────────────┘
                        │
                        ▼
┌─────────────────────────────────────────────────┐
│       SCRAP DEFECTIVE PART OF ELECTRODE SHEET,   │
│           BASED ON CALIBRATED COORDINATES        │─── P140
└─────────────────────────────────────────────────┘
```

[FIG. 3]

## INTERNATIONAL SEARCH REPORT

| International application No. |
|---|
| **PCT/KR2024/013253** |

### A. CLASSIFICATION OF SUBJECT MATTER

**H01M 4/04**(2006.01)i; **B65H 43/04**(2006.01)i; **G01N 21/88**(2006.01)i; **G01B 7/004**(2006.01)i: **G06Q 50/04**(2012.01)i

According to International Patent Classification (IPC) or to both national classification and IPC

### B. FIELDS SEARCHED

Minimum documentation searched (classification system followed by classification symbols)

H01M 4/04(2006.01); B05C 11/10(2006.01); B65H 43/04(2006.01); G01N 27/90(2006.01): H01M 10/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable. search terms used)

eKOMPASS (KIPO internal) & keywords: 배터리(battery), 전극 롤(electrode roll). 기준점(reference point), 좌표 (coordinate). 데이터(data), 서버(server), PLC(Programmable Logic Controller). 반전(reversal)

### C. DOCUMENTS CONSIDERED TO BE RELEVANT

| Category* | Citation of document, with indication, where appropriate, of the relevant passages | Relevant to claim No. |
|---|---|---|
| A | KR 10-2023-0026865 A (LG ENERGY SOLUTION, LTD.) 27 February 2023 (2023-02-27)<br>See claims 1, 3, 6 and 7; paragraphs [0040], [0053] and [0058]-[0063]; and figures 1 and 2. | 1-15 |
| A | JP 2009-266739 A (HITACHI VEHICLE ENERGY LTD.) 12 November 2009 (2009-11-12)<br>See abstract; claims 1-15; and figures 6-12. | 1-15 |
| A | KR 10-2022-0134303 A (LG ENERGY SOLUTION, LTD.) 05 October 2022 (2022-10-05)<br>See claims 1-20. | 1-15 |
| A | JP 2017-045536 A (NISSAN MOTOR CO., LTD.) 02 March 2017 (2017-03-02)<br>See claims 1-9. | 1-15 |
| A | KR 10-2206908 B1 (STANDARD MACHINE VISION CO., LTD.) 26 January 2021 (2021-01-26)<br>See abstract: claims 1, 2 and 5: and paragraphs [0013] and [0045]-[0050]. | 1-15 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 December 2024** | **06 December 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

**PCT/KR2024/013253**

| Patent document cited in search report | | | Publication date (day/month/year) | Patent family member(s) | | | Publication date (day/month/year) |
|---|---|---|---|---|---|---|---|
| KR | 10-2023-0026865 | A | 27 February 2023 | US | 2023-0097728 | A1 | 30 March 2023 |
| JP | 2009-266739 | A | 12 November 2009 | JP | 5415017 | B2 | 12 February 2014 |
| KR | 10-2022-0134303 | A | 05 October 2022 | CN | 115917776 | A | 04 April 2023 |
| | | | | EP | 4156317 | A1 | 29 March 2023 |
| | | | | EP | 4156317 | A4 | 29 May 2024 |
| | | | | KR | 10-2623933 | B1 | 11 January 2024 |
| | | | | US | 2023-0251752 | A1 | 10 August 2023 |
| | | | | WO | 2022-203252 | A1 | 29 September 2022 |
| JP | 2017-045536 | A | 02 March 2017 | JP | 6471647 | B2 | 20 February 2019 |
| KR | 10-2206908 | B1 | 26 January 2021 | | None | | |

Form PCT/ISA/210 (patent family annex) (July 2022)

**EP 4 654 269 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230117944